# DEMANDE DE BREVET EUROPEEN

(11) **EP 4 748 675 A1**
(43) Date de publication de la demande: **27.05.2026**
(21) Numéro de dépôt: 25217804.1
(22) Date de dépôt: 21.11.2025
(51) Int. Cl.: B60W 30/14, B60W 30/18, B60W 50/10

(54) **PROCÉDÉ DE FONCTIONNEMENT D'UN RÉGULATEUR DE VITESSE ADAPTATIF D'UN VÉHICULE AUTOMOBILE**

(30) Priorité: 25.11.2024 FR 2412936
(71) Demandeur: AMPERE s.a.s., 92100 Boulougne-Billancourt (FR)
(72) Inventeur: HALLOUIN, Thibault, 78084 GUYANCOURT (FR); KVIESKA, Pedro, 78084 GUYANCOURT (FR)
(74) Mandataire: Renault Group

(57) **Abrégé**

Procédé de fonctionnement d'un régulateur de vitesse adaptatif (2) d'un véhicule automobile (1), le régulateur de vitesse adaptatif (2) permettant de réguler la vitesse du véhicule automobile (1) en fonction du déplacement d'un véhicule cible précédant le véhicule automobile (1), le procédé comprenant les étapes suivantes :
- lors du roulage du véhicule automobile (1), détection d'au moins un événement de désactivation du régulateur de vitesse adaptatif (2) du fait d'un utilisateur du véhicule,
- analyse automatique de cet au moins un événement, et
- en conséquence de l'analyse, modification automatique d'un paramètre de fonctionnement du régulateur de vitesse adaptatif (2).

## Description

L'invention concerne un procédé de fonctionnement d'un régulateur de vitesse adaptatif d'un véhicule automobile. L'invention concerne aussi un régulateur de vitesse adaptatif d'un véhicule automobile. L'invention porte encore sur un véhicule automobile comprenant un tel système de gestion et/ou un tel système de détection. L'invention porte également sur un programme d'ordinateur mettant en œuvre un des procédés mentionnés. L'invention porte enfin sur un support d'enregistrement sur lequel est enregistré un tel programme.

Sur certains véhicules automobiles actuels, il est connu de mettre en œuvre des régulateurs de vitesse adaptatifs. Ces régulateurs permettent classiquement de gérer automatiquement la vitesse de déplacement longitudinal d'un véhicule automobile. Une vitesse de consigne peut être entrée et suivie par le véhicule automobile qui se déplace alors à cette vitesse. Ces régulateurs s'adaptent aux conditions de trafic sur la voie en limitant automatiquement la vitesse de consigne si un véhicule cible circule à plus faible vitesse sur la voie,

Le but de l'invention est de fournir un procédé de fonctionnement d'un régulateur de vitesse et un régulateur de vitesse améliorant les dispositifs et procédés connus de l'art antérieur. En particulier, l'invention permet de réaliser un régulateur de vitesse et un procédé de fonctionnement d'un tel régulateur qui soient les plus proches possibles de la conduite qu'adopteraient les utilisateurs des véhicules automobiles.

Selon l'invention, un procédé régit le fonctionnement d'un régulateur de vitesse adaptatif d'un véhicule automobile, le régulateur de vitesse adaptatif permettant de réguler la vitesse du véhicule automobile en fonction du déplacement d'un véhicule cible précédant le véhicule automobile.

Le procédé comprend les étapes suivantes :
- lors du roulage du véhicule automobile, détection d'au moins un événement de désactivation du régulateur de vitesse adaptatif du fait d'un utilisateur du véhicule,
- analyse automatique de cet au moins un événement, et
- en conséquence de l'analyse, modification automatique d'un paramètre de fonctionnement du régulateur de vitesse adaptatif.

L'au moins un événement peut comprendre ou être une désactivation de la régulation de vitesse provoquée par une commande d'accélération ou de freinage requise par l'utilisateur alors qu'un véhicule cible est détecté et la modification peut être une augmentation de la dynamique de suivi du véhicule cible, notamment une augmentation de la dynamique d'un filtre de second ordre, si le régulateur de vitesse adaptatif comprend un tel filtre de second ordre. On comprend qu'une augmentation de la dynamique de suivi correspond à une variation dans le sens de variations plus rapides de la vitesse.

L'au moins un événement peut comprendre ou être une désactivation de la régulation de vitesse provoquée par une commande d'accélération requise par l'utilisateur alors qu'un véhicule cible est détecté et la modification peut être une diminution du temps de suivi du véhicule cible ou d'une distance seuil de suivi.

L'au moins un événement peut comprendre ou être une désactivation de la régulation de vitesse provoquée par une commande d'accélération requise par l'utilisateur et supérieure à l'accélération définie par le régulateur de vitesse adaptatif alors qu'aucun véhicule cible n'est suivi et la modification peut être une augmentation de la valeur absolue de la pente d'accélération du véhicule automobile utilisée par le régulateur de vitesse adaptatif. De façon connue en soi, la pente de l'accélération désigne la dérivée temporelle de l'accélération, en fonction du temps.

L'au moins un événement peut comprendre ou être une désactivation de la régulation de vitesse provoquée par une commande de freinage requise par l'utilisateur alors qu'un véhicule cible est détecté et la modification peut être une augmentation du temps de suivi du véhicule cible ou d'une distance seuil de suivi.

L'au moins un événement peut comprendre ou être une désactivation de la régulation de vitesse provoquée par une commande de freinage requise par l'utilisateur et supérieure au freinage défini par le régulateur de vitesse adaptatif alors qu'aucun véhicule cible n'est suivi et la modification peut être une augmentation de la valeur absolue de la pente de décélération du véhicule automobile utilisée par le régulateur de vitesse adaptatif.

On comprend que l'événement de désactivation du régulateur de vitesse adaptatif provoque une désactivation (temporaire ou permanente) du régulateur de vitesse adaptatif, indépendamment de l'analyse de cet évènement et de la modification automatique d'un paramètre de fonctionnement du régulateur de vitesse adaptatif. Le paramètre modifié sera alors pris en compte par le régulateur de vitesse adaptatif, uniquement à compter de la prochaine activation dudit régulateur de vitesse adaptatif.

Selon l'invention, la modification automatique du paramètre de fonctionnement du régulateur de vitesse adaptatif est mise en œuvre après qu'un nombre donné d'événements de même nature de désactivation du régulateur de vitesse adaptatif ont été détectés pendant une période de roulage prédéfinie ou pendant une distance de roulage prédéfinie.

La modification automatique du paramètre de fonctionnement du régulateur de vitesse adaptatif peut être une modification d'une valeur prédéfinie.

La modification automatique du paramètre de fonctionnement du régulateur de vitesse adaptatif peut être une modification d'une valeur dépendante de l'événement ou des événements.

Le paramètre de fonctionnement peut être modifiable uniquement dans une plage de valeurs prédéfinies.

L'invention concerne aussi un régulateur de vitesse adaptatif d'un véhicule automobile, le régulateur de vitesse adaptatif comprenant des éléments matériels et/ou logiciels mettant en œuvre le procédé défini précédemment, notamment des éléments matériels et/ou logiciels conçus pour mettre en œuvre le procédé défini précédemment.

L'invention concerne aussi un véhicule automobile comprenant un régulateur de vitesse adaptatif d'un véhicule automobile défini précédemment.

Selon l'invention, un produit programme d'ordinateur comprend des instructions de code de programme enregistrées sur un support lisible par ordinateur pour mettre en œuvre les étapes du procédé défini précédemment lorsque ledit programme fonctionne sur un ordinateur

Selon l'invention, un produit programme d'ordinateur téléchargeable depuis un réseau de communication et/ou enregistré sur un support de données lisible par un ordinateur et/ou exécutable par un ordinateur, est caractérisé en ce qu'il comprend des instructions qui, lorsque le programme est exécuté par l'ordinateur, conduisent celui-ci à mettre en œuvre le procédé défini précédemment.

Selon l'invention, un support d'enregistrement de données, lisible par un ordinateur, sur lequel est enregistré un programme d'ordinateur comprend des instructions de code de programme de mise en œuvre le procédé défini précédemment.

Selon l'invention, un support d'enregistrement lisible par ordinateur comprend des instructions qui, lorsqu'elles sont exécutées par un ordinateur, conduisent celui-ci à mettre en œuvre le procédé défini précédemment.

L'invention a encore pour objet un signal d'un support de données, portant le produit programme d'ordinateur défini précédemment.

Le dessin annexé représente, à titre d'exemple, un mode de réalisation d'un véhicule automobile selon l'invention et un mode d'exécution d'un procédé de fonctionnement selon l'invention.
La figure 1 est une représentation schématique d'un mode de réalisation d'un véhicule automobile selon l'invention.
La figure 2 est une vue schématique d'un mode de réalisation d'un régulateur de vitesse adaptatif selon l'invention.
La figure 3 est un schéma illustrant une étape de planification d'un étage de la figure 2.
La figure 4 est un schéma illustrant une boucle fermée du mode de réalisation d'un régulateur de vitesse adaptatif selon l'invention.
La figure 5 est une représentation simplifiée d'un étage du mode de réalisation d'un régulateur de vitesse adaptatif selon l'invention.

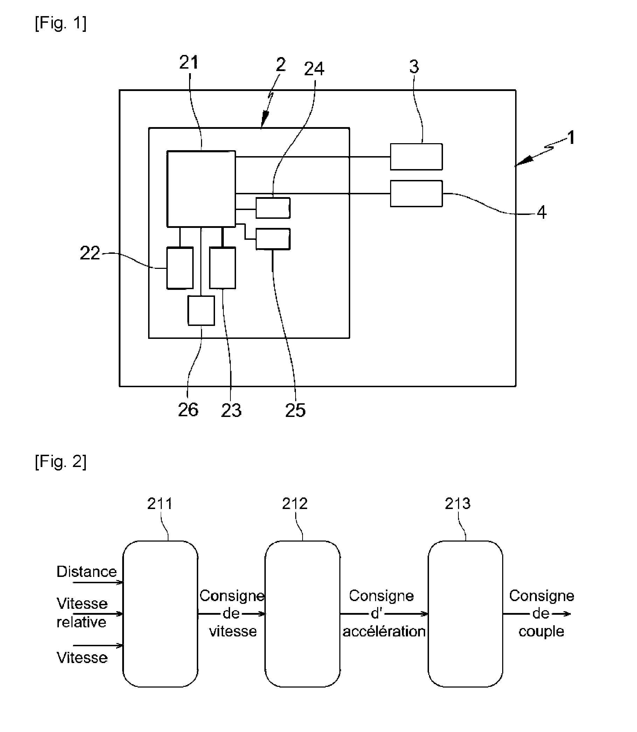

Un mode de réalisation d'un véhicule automobile 1 selon l'invention est décrit ci-après en référence aux figures 1 à 5.

Le véhicule automobile 1 est par exemple un véhicule automobile de tourisme ou un véhicule automobile utilitaire. Toutefois, le véhicule peut être de toute nature. Le véhicule est un véhicule comprenant un système d'assistance à la conduite. Le véhicule automobile peut être entraîné par tout type de motorisation.

Le véhicule comprend en particulier, comme assistance à la conduite, un régulateur de vitesse adaptatif 2. Le régulateur de vitesse adaptatif 2 permet de gérer automatiquement la vitesse de déplacement longitudinale du véhicule automobile 1. Ainsi, le régulateur de vitesse adaptatif 2 permet :
- de maintenir constante la vitesse de déplacement longitudinale du véhicule automobile 1 en l'absence d'un véhicule cible détecté devant le véhicule automobile 1, et
- d'adapter (en la diminuant) la vitesse de déplacement longitudinale du véhicule automobile 1 afin de maintenir un certain intervalle (de distance et/ou de temps) séparant le véhicule automobile d'un véhicule cible détecté devant le véhicule automobile 1.

Le véhicule automobile 1 comprend encore :
- un groupe motopropulseur 3 d'entraînement du véhicule automobile 1, et
- un système de freinage 4 du véhicule automobile 1.

Afin d'assurer sa fonction, le régulateur de vitesse adaptatif 2 génère des ordres de commande à destination du moteur 3 et des ordres de commande à destination du système de freinage 4.

Le régulateur de vitesse adaptatif 2 comprend :
- un calculateur 21,
- un capteur 22 de détection d'un véhicule cible devant ou précédant le véhicule automobile 1 et de détermination de la distance au véhicule cible,
- un capteur 23 de détermination de la vitesse longitudinale du véhicule automobile 1,
- un détecteur 24 d'actionnement d'un organe de commande d'accélération (définissant le couple et le régime de fonctionnement du groupe motopropulseur),
- un détecteur 25 d'actionnement d'un organe de commande de freinage (définissant un couple de freinage à appliquer par le système de freinage 4),
- une interface homme-machine 26 permettant notamment au conducteur du véhicule automobile de définir des consignes de vitesse de déplacement longitudinal du véhicule autoobile1.

On décrit ci-après, en référence aux figures 2 à 5, le fonctionnement de base du régulateur de vitesse adaptatif 2 selon l'invention.

Le régulateur de vitesse adaptatif 2 présente une architecture en cascade où un premier étage 211 régule la distance par rapport au véhicule cible (ou une vitesse de consigne s'il n'y a pas de véhicule cible détecté). Ce premier étage 211 fournit une consigne de vitesse. La consigne de vitesse attaque un deuxième étage 212 de régulation de vitesse qui fournit une consigne d'accélération. La consigne d'accélération attaque un troisième étage 213 de régulation de couple qui fournit une consigne de couple qui est transmise au groupe motopropulseur 3 et/ou au système de freinage 4 sous forme d'ordres de commande de couple d'accélération, de décélération ou de freinage.

L'invention porte plus spécifiquement sur le premier étage 211 de régulation de distance.

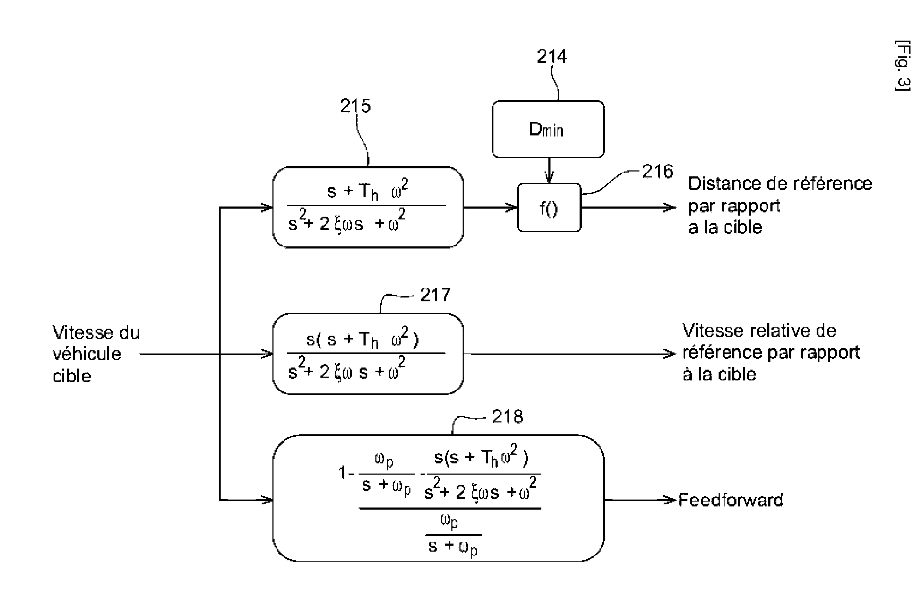

Ce premier étage 211 comprend un algorithme assurant deux fonctions principales :
- une planification de trajectoire qui définit la distance par rapport au véhicule cible, et
- une boucle fermée qui définit une vitesse pour asservir cette distance. La planification peut être résumée par la figure 3 où
- s est la variable de Laplace,
- ξ est l'amortissement souhaité pour une dynamique du second ordre (sans dimension),
- w est la pulsation propre pour une dynamique du second ordre (en rad/s),
- ωₚ est une fréquence de coupure (en rad/s),
- Tₕ est le temps de suivi souhaité (en s).

Avec cette logique de planification, on souhaite garder une distance constante en régime permanent par rapport à la cible avec une dynamique d'ordre 2. Cela est fait pour filtrer un véhicule cible qui aurait un comportement saccadé provoqué par sa vitesse non constante et qu'on estime inconfortable. Cette logique a trois sorties principales :
- la distance de référence par rapport au véhicule cible,
- la vitesse relative de référence par rapport au véhicule cible, et
- une commande (feedforward) (basée sur une inversion statique d'un modèle de groupe motopropulseur simplifié).

Sur la figure 3, il peut être constaté que le premier bloc 215 de planification de trajectoire a comme réponse en régime permanent simplement Tₕ, qui correspond au temps de suivi. Ce temps de suivi Tₕ fois la vitesse du véhicule cible est égal à une distance (par exemple un temps de suivi à 3 secondes et une cible à 90km/h aboutissent à une distance de suivi de 75m). Ce bloc 215 est suivi par une fonction 216 non-linéaire F() qui arbitre entre la distance calculée et une distance minimale (fonction max).

Le deuxième bloc 217 illustre l'obtention de la vitesse de suivi (la deuxième fonction) correspondant à la dérivée de l'expression du premier bloc (s fois la fonction du premier bloc 215).

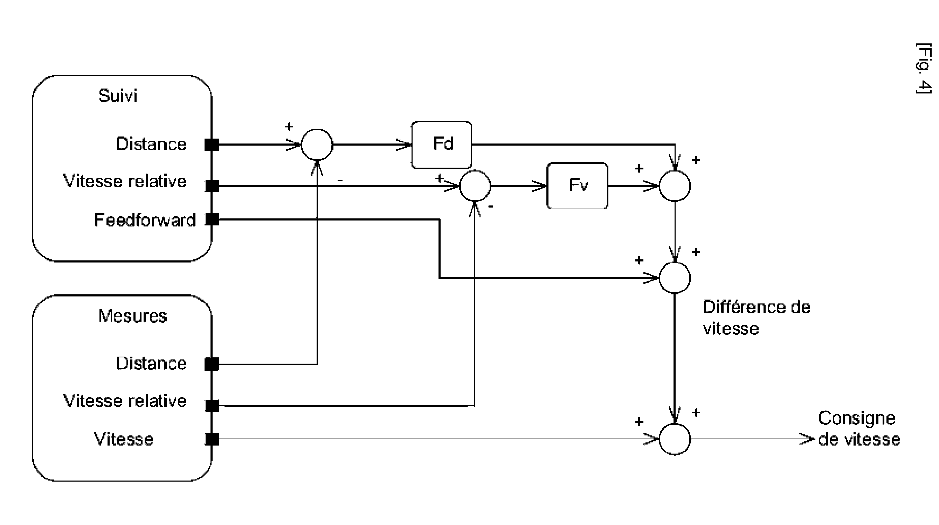

Le troisième bloc 218 consiste en une commande basée sur un modèle simplifié du groupe motopropulseur présenté par un filtre du premier ordre où la fréquence du filtre est ωₚ (rad/s). La figure 4 illustre un régulateur Proportionnel Dérivé avec un gain Fd (proportionnel à la distance) et un gain Fv (proportionnel à la vitesse (donc la dérivée de la distance) . La boucle de régulation calcule une différence de vitesse qui est ajoutée à la vitesse du véhicule et cette sortie est transmise à l'étage 212 de régulation de vitesse.

La boucle fermée est illustrée sur la figure 4. Ce régulateur PD peut être divisé en 5 opérations :
- La distance de consigne (issue du bloc 216) est comparée à la mesure de distance au véhicule (consigne moins mesure). Cette erreur de distance est multipliée par un gain Fd, il s'agit de la partie proportionnelle du régulateur PD. Fd a une dimension d'une fréquence.
- La vitesse relative mesurée (issue du bloc 217) est comparée à la valeur mesurée de la vitesse relative (consigne-mesure). Cette erreur en vitesse est multipliée par un gain Fv. Il s'agit de la partie dérivée du régulateur PD, la vitesse étant la dérivée de la distance. Fv n'a pas de dimension.
- Ces deux composantes d'erreur sont additionnées et leur somme correspond à un incrément de vitesse (qui est une différence de vitesse particulière comme indiqué sur la figure 4).
- La commande issue du bloc 218 est additionnée à la somme précédente constituant un incrément de vitesse.
- Cette dernière valeur correspond à la sortie du régulateur PD qui correspond à un delta de vitesse. Cette dernière valeur est additionnée à la vitesse courante du véhicule automobile 1 pour obtenir la consigne de vitesse en sortie de premier étage 211.

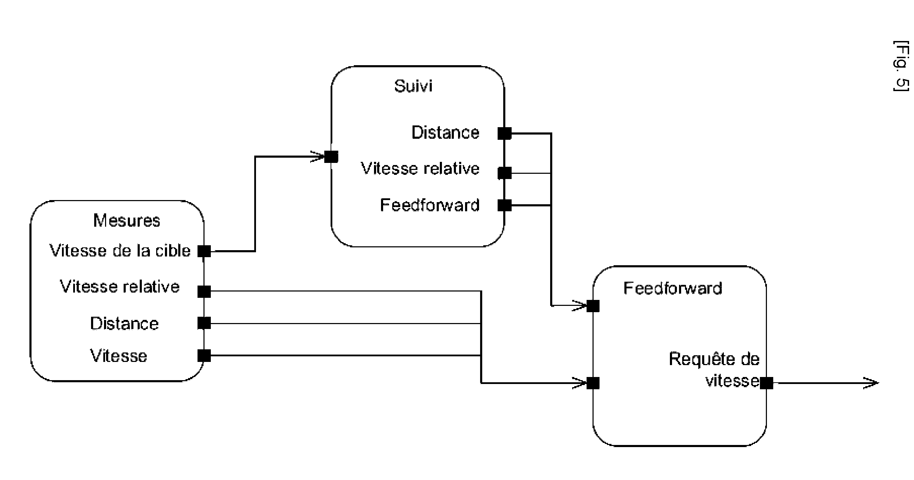

De façon simplifiée, l'étage 211 peut encore être représenté comme sur la figure 5.

La consigne de vitesse est envoyée au deuxième étage 212 qui est en charge du suivi de vitesse en temps réel.

Dans le cas où il n'y a pas de suivi de véhicule cible, le premier étage 211 fournit une consigne de vitesse (qui peut être une rampe à pente constante par exemple) croissante ou décroissante.

Le calculateur 21 comprend tous les éléments matériels et/ou logiciels nécessaires à la mise en œuvre du procédé selon l'invention. Les éléments matériels et/ou logiciels peuvent comprendre des algorithmes ou des programmes ou des modules logiciels.

Le régulateur de vitesse adaptatif 2 fonctionne de préférence en utilisant plusieurs paramètres réglables comme notamment :
- une pente d'accélération du véhicule automobile 1 (définissant une accélération permettant de rejoindre une vitesse de consigne en l'absence de détection d'un véhicule cible) valant par exemple de 0.5m/s² à 3m/s², et/ou
- une pente de décélération du véhicule automobile 1 (définissant une décélération permettant de rejoindre une vitesse de consigne en l'absence de détection d'un véhicule cible) valant par exemple de -0.5m/s² à -3m/s², et/ou
- une dynamique de suivi du véhicule cible, notamment une dynamique d'un filtre de second ordre du régulateur de vitesse adaptatif 2 (définissant un amortissement des variations de vitesse du véhicule cible précédent), valant par exemple environ 0.7, voire un peu plus élevé, et ω du filtre entre 0.6 rad/s et 6 rad/s (ω= 2πf et f valant entre 0.1Hz et 1Hz, et/ou
- une distance seuil de suivi du véhicule cible précédant (par exemple court, moyen, long), et/ou
- un temps seuil de suivi du véhicule cible précédent (par exemple court valant 1s, moyen valant 2s et long valant 2.5 à 3s).

Avantageusement, les valeurs de tout ou partie de ces paramètres sont modifiables dans des plages déterminées (c'est-à-dire dans des plages figées lors de la production du régulateur de vitesse adaptatif 2). Chaque modification permet de modifier le comportement du régulateur de vitesse adaptatif 2 et donc la dynamique du véhicule automobile 1 lorsque le régulateur de vitesse adaptatif 2 est actif.

En particulier, le calculateur 21 comprend les étages 211, 212 et 213 décrits précédemment ainsi que tous leurs éléments.

Des particularités d'un mode d'exécution du procédé de fonctionnement du régulateur de vitesse adaptatif du véhicule automobile sont décrites plus en détail ci-après. Le procédé de fonctionnement du régulateur de vitesse adaptatif du véhicule automobile peut aussi être vu comme un procédé de fonctionnement d'un véhicule automobile équipé du régulateur de vitesse adaptatif. Le procédé de fonctionnement du régulateur de vitesse adaptatif du véhicule automobile peut aussi être vu comme un procédé de gestion de la vitesse de déplacement du véhicule.

Comme vu précédemment, le régulateur de vitesse adaptatif permet de réguler la vitesse du véhicule automobile en fonction du déplacement d'un véhicule cible le précédant.

Le procédé comprend les étapes suivantes :
(i) lors du roulage du véhicule automobile, détection d'au moins un événement de désactivation du régulateur de vitesse adaptatif du fait d'un utilisateur du véhicule,
(ii) analyse automatique de cet au moins un événement, et
(iii) en conséquence de l'analyse, modification automatique d'un paramètre de fonctionnement du régulateur de vitesse adaptatif.

L'étape (i) de détection comprend par exemple une surveillance d'une action de l'utilisateur du véhicule automobile sur un organe de commande d'accélération et/ou sur un organe de commande de freinage, une telle action ayant pour effet de désactiver le régulateur de vitesse adaptatif 2, c'est-à-dire que le régulateur de vitesse adaptatif 2 ne contrôle plus la vitesse du véhicule automobile 1, mais que cette vitesse est alors contrôlée par l'action de l'utilisateur sur l'organe de commande d'accélération et/ou l'organe de commande de freinage. De préférence, le régulateur de vitesse adaptatif 2 étant activé (c'est-à-dire qu'il gère automatiquement le fonctionnement du véhicule automobile 1 pour le faire avancer à une vitesse de consigne ou de le maintenir à une distance définie d'un véhicule cible le précédant) :
- une action de l'utilisateur sur l'organe de commande d'accélération (au-delà d'un certain seuil) provoque une désactivation temporaire du régulateur de vitesse adaptatif 2, c'est-à-dire que, dès que l'action de l'utilisateur est terminée (ou suffisamment diminuée), le régulateur de vitesse adaptatif 2 est automatiquement réactivé ou replacé dans un état activé, et/ou
- une action de l'utilisateur sur l'organe de commande de freinage provoque une désactivation permanente du régulateur de vitesse adaptatif 2, c'est-à-dire que, même lorsque l'action de l'utilisateur est terminée, le régulateur de vitesse adaptatif 2 n'est pas automatiquement réactivé ou replacé dans un état activé. Il peut néanmoins être réactivé par une autre action de l'utilisateur.

Le terme de « désactivation » dans l'étape (i) couvre les deux aspects de la désactivation, c'est-à-dire la désactivation temporaire et la désactivation permanente.

Dans l'étape (ii) suivante, on, en particulier le régulateur de vitesse adaptatif 2 ou un autre système du véhicule automobile, analyse cet événement détecté de désactivation. En particulier, on analyse des circonstances et/ou des conditions et/ou des états et/ou des valeurs de paramètres rencontrés au moment de l'événement. Par exemple, l'analyse peut comprendre la détermination des faits qui suivent, au moment de l'événement :
- si l'action de l'utilisateur est une action de freinage ou une action d'accélération, et/ou
- si un véhicule cible précédant le véhicule automobile 1 est détecté, c'est-à-dire si le régulateur de vitesse adaptatif 2 est en train de limiter la vitesse du véhicule automobile 1 en fonction de la distance le séparant d'un véhicule cible le précédant, et/ou
- si le régulateur est en train de commander un freinage ou une accélération en vue d'atteindre une nouvelle vitesse de consigne.

Puis, dans une étape (iii), en conséquence de l'analyse de l'étape (ii), on modifie automatiquement un paramètre de fonctionnement du régulateur de vitesse adaptatif 2, notamment on augmente ou on diminue la valeur d'au moins un des paramètres de fonctionnement du régulateur de vitesse adaptatif 2. En d'autres termes, on reconfigure le régulateur de vitesse adaptatif 2 afin qu'il ait un comportement différent ou un fonctionnement différent dans deux situations identiques. Par exemple :
- on augmente ou on diminue la valeur absolue d'une pente d'accélération du véhicule automobile 1, et/ou
- on augmente ou on diminue la valeur absolue d'une pente décélération du véhicule automobile 1, et/ou
- on augmente ou on diminue la valeur d'une dynamique de suivi du véhicule cible, notamment la valeur d'une dynamique d'un filtre de second ordre du régulateur de vitesse adaptatif, et/ou
- on augmente ou on diminue la valeur d'une distance seuil de suivi du véhicule cible précédent, et/ou
- on augmente ou on diminue la valeur d'un temps seuil de suivi du véhicule cible précédent.

Dans un premier exemple, on suppose la situation définie comme suit :
- le véhicule automobile est en cours de roulage,
- la vitesse de déplacement du véhicule automobile est régulée par le régulateur de vitesse adaptatif 2 qui est activé,
- un véhicule cible précédant le véhicule automobile 1 est détecté et le régulateur de vitesse adaptatif 2 régule donc la distance ou le temps de suivi du véhicule cible.

Dans cette situation définie, l'utilisateur exerce une action sur l'organe de commande d'accélération. La vitesse du véhicule automobile 1 augmente donc en conséquence et le régulateur de vitesse adaptatif 2 est temporairement désactivé jusqu'à ce que l'utilisateur termine son action sur l'organe de commande d'accélération ou limite suffisamment son action sur l'organe de commande d'accélération. Cette désactivation temporaire ainsi que la situation sont détectées. L'action de l'utilisateur est interprétée par le régulateur de vitesse adaptatif 2 comme une volonté de l'utilisateur de modifier le comportement du régulateur de vitesse adaptatif 2. En conséquence, on effectue automatiquement :
- une augmentation de la dynamique de suivi du véhicule cible, notamment une augmentation de la dynamique du filtre de second ordre (augmentation de la fréquence), et/ou
- une diminution du temps de suivi du véhicule cible ou d'une distance seuil de suivi du véhicule cible.

Une ou plusieurs valeurs définissant ces nouveaux paramètres sont alors mémorisées et le régulateur de vitesse adaptatif 2 fonctionne ensuite avec cette nouvelle valeur ou ces nouvelles valeurs.

Dans un deuxième exemple, on suppose la situation définie comme suit :
- le véhicule automobile est en cours de roulage,
- la vitesse de déplacement du véhicule automobile est régulée par le régulateur de vitesse adaptatif 2 qui est activé,
- le véhicule automobile 1 est en phase d'accélération pour atteindre la vitesse de consigne définie dans le régulateur (par exemple, le véhicule roulant à 90 km/h, l'utilisateur programme une nouvelle vitesse de consigne de 130 km/h),
- aucun véhicule cible précédant le véhicule automobile 1 n'est détecté.

Dans cette situation définie, l'utilisateur exerce une action sur l'organe de commande d'accélération. La vitesse du véhicule automobile 1 augmente donc en conséquence et le régulateur de vitesse adaptatif 2 est temporairement désactivé jusqu'à ce que l'utilisateur termine son action sur l'organe de commande d'accélération ou limite suffisamment son action sur l'organe de commande d'accélération. Cette désactivation temporaire ainsi que la situation sont détectées. L'action de l'utilisateur est interprétée par le régulateur de vitesse adaptatif 2 comme une volonté de l'utilisateur de modifier le comportement du régulateur de vitesse adaptatif 2. En conséquence, on effectue automatiquement une modification du profil d'accélération du véhicule automobile 1, notamment on effectue augmentation de la valeur absolue de la pente d'accélération du véhicule automobile utilisée par le régulateur de vitesse adaptatif 2. Une ou plusieurs valeurs définissant ces nouveaux paramètres sont alors mémorisées et le régulateur de vitesse adaptatif 2 fonctionne ensuite avec cette nouvelle valeur ou ces nouvelles valeurs.

Dans un troisième exemple, on suppose la situation définie comme suit :
- le véhicule automobile est en cours de roulage,
- la vitesse de déplacement du véhicule automobile est régulée par le régulateur de vitesse adaptatif 2 qui est activé,
- un véhicule cible précédant le véhicule automobile 1 est détecté et le régulateur de vitesse adaptatif 2 régule donc la distance ou le temps de suivi du véhicule cible.

Dans cette situation définie, l'utilisateur exerce une action sur l'organe de commande de freinage. La vitesse du véhicule automobile 1 diminue donc en conséquence et le régulateur de vitesse adaptatif 2 est désactivé (jusqu'à ce que l'utilisateur le réactive expressément). Cette désactivation ainsi que la situation sont détectées. L'action de l'utilisateur est interprétée par le régulateur de vitesse adaptatif 2 comme une volonté de l'utilisateur de modifier le comportement du régulateur de vitesse adaptatif 2. En conséquence, on effectue automatiquement :
- une augmentation de la dynamique de suivi du véhicule cible, notamment une augmentation de la dynamique du filtre de second ordre (augmentation de la fréquence), et/ou
- une augmentation du temps de suivi du véhicule cible ou d'une distance seuil de suivi du véhicule cible. Une ou plusieurs valeurs définissant ces nouveaux paramètres sont alors mémorisées et le régulateur de vitesse adaptatif 2 fonctionne ensuite avec cette nouvelle valeur ou ces nouvelles valeurs.

Dans un quatrième exemple, on suppose la situation définie comme suit :
- le véhicule automobile est en cours de roulage,
- la vitesse de déplacement du véhicule automobile est régulée par le régulateur de vitesse adaptatif 2 qui est activé,
- le véhicule automobile 1 est en phase de décélération pour atteindre une nouvelle vitesse de consigne définie dans le régulateur (par exemple, le véhicule roulant à 130 km/h, l'utilisateur programme une nouvelle vitesse de consigne de 90 km/h),
- aucun véhicule cible précédant le véhicule automobile 1 n'est détecté.

Dans cette situation définie, l'utilisateur exerce une action sur l'organe de commande de freinage. La vitesse du véhicule automobile 1 diminue donc en conséquence et le régulateur de vitesse adaptatif 2 est désactivé (jusqu'à ce que l'utilisateur le réactive expressément). Cette désactivation ainsi que la situation sont détectées. L'action de l'utilisateur est interprétée par le régulateur de vitesse adaptatif 2 comme une volonté de l'utilisateur de modifier le comportement du régulateur de vitesse adaptatif 2. En conséquence, on effectue une modification du profil de décélération du véhicule automobile 1, notamment on effectue une diminution de la valeur absolue de la pente d'accélération du véhicule automobile utilisée par le régulateur de vitesse adaptatif 2. Une ou plusieurs valeurs définissant ces nouveaux paramètres sont alors mémorisées et le régulateur de vitesse adaptatif 2 fonctionne ensuite avec cette nouvelle valeur ou ces nouvelles valeurs.

Le procédé peut comprendre la mise en œuvre de n'importe quelles combinaisons des premier, deuxième, troisième et quatrième exemples mentionnés plus haut.

De préférence, la modification automatique du paramètre de fonctionnement du régulateur de vitesse adaptatif 2 est une modification d'une quantité prédéfinie d'une ou plusieurs valeurs d'au moins un paramètre. En alternative, la modification peut être une modification d'une quantité définie par l'action de l'utilisateur, par exemple une modification d'une quantité plus ou moins grande selon l'intensité de l'action de l'utilisateur sur l'organe de commande d'accélération ou de freinage ayant entraîné l'événement.

De préférence, les paramètres de fonctionnement sont modifiables uniquement dans une plage de valeurs prédéfinies.

De préférence encore, les modifications peuvent être mises en œuvre seulement lorsque plusieurs actions similaires exercées par un utilisateur dans des contextes similaires sont détectées dans un dernier intervalle de temps et/ou de distance parcourus à différents moments. C'est alors la répétition des actions de l'utilisateur au-delà d'un certain nombre d'itérations qui est interprétée par le régulateur de vitesse adaptatif 2 comme une volonté de l'utilisateur de modifier le comportement du régulateur de vitesse adaptatif 2. Pour ce faire, un compteur peut être mis en œuvre pour chaque couple d'action et de contexte pertinent. Le compteur qui a déclenché une modification automatique est ensuite remis à zéro.

Différents utilisateurs utilisant le véhicule automobile 1 peuvent être identifiés et un fonctionnement de régulateur de vitesse adaptatif 2 peut être défini et configuré comme décrit plus haut de manière différente pour chaque utilisateur.

De préférence, des actions intenses sur l'organe de commande de freinage ne sont pas interprétées comme une volonté de modifier le fonctionnement du régulateur de vitesse adaptatif, mais comme un besoin de freinage d'urgence.

## Revendications

1. Procédé de fonctionnement d'un régulateur de vitesse adaptatif (2) d'un véhicule automobile (1), le régulateur de vitesse adaptatif (2) permettant de réguler la vitesse du véhicule automobile (1) en fonction du déplacement d'un véhicule cible précédant le véhicule automobile (1), le procédé comprenant les étapes suivantes :
- lors du roulage du véhicule automobile (1), détection d'au moins un événement de désactivation du régulateur de vitesse adaptatif (2) du fait d'un utilisateur du véhicule,
- analyse automatique de cet au moins un événement, et
- en conséquence de l'analyse, modification automatique d'un paramètre de fonctionnement du régulateur de vitesse adaptatif (2), **caractérisé en ce que** la modification automatique du paramètre de fonctionnement du régulateur de vitesse adaptatif est mise en œuvre après qu'un nombre donné d'événements de même nature de désactivation du régulateur de vitesse adaptatif ont été détectés pendant une période de roulage prédéfinie ou pendant une distance de roulage prédéfinie.

2. Procédé selon la revendication précédente, **caractérisé en ce que** l'au moins un événement est une désactivation de la régulation de vitesse provoquée par une commande d'accélération ou de freinage requise par l'utilisateur alors qu'un véhicule cible est détecté et **en ce que** la modification est une augmentation de la dynamique de suivi du véhicule cible, notamment une augmentation de la dynamique d'un filtre de second ordre, si le régulateur de vitesse adaptatif (2) comprend un tel filtre de second ordre.

3. Procédé selon la revendication 1 ou 2, **caractérisé en ce que** l'au moins un événement comprend une désactivation de la régulation de vitesse provoquée par une commande d'accélération requise par l'utilisateur alors qu'un véhicule cible est détecté et **en ce que** la modification est une diminution du temps de suivi du véhicule cible ou d'une distance seuil de suivi.

4. Procédé selon l'une des revendications 1 à 3, **caractérisé en ce que** l'au moins un événement comprend une désactivation de la régulation de vitesse provoquée par une commande d'accélération requise par l'utilisateur et supérieure à l'accélération définie par le régulateur de vitesse adaptatif (2) alors qu'aucun véhicule cible n'est suivi et **en ce que** la modification est une augmentation de la valeur absolue de la pente d'accélération du véhicule automobile (1) utilisée par le régulateur de vitesse adaptatif (2).

5. Procédé selon l'une des revendications précédentes, **caractérisé en ce que** l'au moins un événement comprend une désactivation de la régulation de vitesse provoquée par une commande de freinage requise par l'utilisateur alors qu'un véhicule cible est détecté et **en ce que** la modification est une augmentation du temps de suivi du véhicule cible ou d'une distance seuil de suivi.

6. Procédé selon l'une des revendications précédentes, **caractérisé en ce que** l'au moins un événement comprend une désactivation de la régulation de vitesse provoquée par une commande de freinage requise par l'utilisateur et supérieure au freinage défini par le régulateur de vitesse adaptatif (2) alors qu'aucun véhicule cible n'est suivi et **en ce que** la modification est une augmentation de la valeur absolue de la pente de décélération du véhicule automobile (1) utilisée par le régulateur de vitesse adaptatif (2).

7. Procédé selon l'une des revendications précédentes, **caractérisé en ce que** la modification automatique du paramètre de fonctionnement du régulateur de vitesse adaptatif est une modification d'une valeur prédéfinie.

8. Procédé selon l'une des revendications 1 à 6, **caractérisé en ce que** la modification automatique du paramètre de fonctionnement du régulateur de vitesse adaptatif est une modification d'une valeur dépendante de l'événement ou des événements.

9. Procédé selon l'une des revendications précédentes, **caractérisé en ce que** le paramètre de fonctionnement est modifiable uniquement dans une plage de valeurs prédéfinies.

10. Régulateur de vitesse adaptatif (2) d'un véhicule automobile (1), le régulateur de vitesse adaptatif (2) comprenant des éléments (21, 22, 23, 24, 25, 26) matériels et/ou logiciels conçus pour mettre en œuvre le procédé selon l'une des revendications 1 à 9.

11. Véhicule automobile (1) comprenant un régulateur de vitesse adaptatif (2) d'un véhicule automobile selon la revendication précédente.
